# EUROPEAN PATENT SPECIFICATION

(11) **EP 3 767 336 B1**
(45) Date of publication and mention of the grant of the patent: **08.03.2023**
(21) Application number: 18909421.2
(22) Date of filing: 16.03.2018
(51) Int. Cl.: G01S 17/89, G01S 17/04, G01S 7/48, G01S 7/481

(54) **LIGHT MONITORING DEVICE AND METHOD**
LICHTÜBERWACHUNGSVORRICHTUNG UND -VERFAHREN
DISPOSITIF ET PROCÉDÉ DE SURVEILLANCE DE LUMIÈRE

(43) Date of publication of application: 20.01.2021
(73) Proprietor: NEC Corporation, 108-8001 Tokyo (JP)
(72) Inventor: NOGUCHI, Hidemi, Tokyo 108-8001 (JP)
(74) Representative: Vossius & Partner Patentanwälte Rechtsanwälte mbB
(86) International application number: PCT/JP2018/010549
(87) International publication number: WO 2019/176101

(56) References cited:
- JP-A- H0 712 934
- JP-A- 2000 088 566
- JP-A- 2017 219 383
- US-A1- 2005 088 643
- US-B1- 6 411 371

## Description

### Technical Field

The present disclosure relates to an optical monitoring apparatus and method, and more particularly, to an optical monitoring apparatus and method for emitting lights and monitoring an area to be monitored based on reflected lights of the emitted lights.

### Background Art

A remote sensing technology using lights such as LiDAR (Light Detection and Ranging) is known. The LiDAR device irradiates an object with, for example, a pulsed laser beam. A part of the laser beam irradiated to the object is reflected thereby, and the LiDAR device receives the reflected light of the irradiated laser beam. The LiDAR device detects the presence or absence of an object and calculates the distance to the object based on the reflected light received. The distance from the LiDAR device to the object can be calculated based on the time from the irradiation of the laser light to the time of receiving the reflected light. The LiDAR device can be applied to applications such as forward monitoring in vehicles, monitoring of intruders in important facilities, and detection of obstacles in airports.

With respect to LiDAR, Patent Literature 1 discloses a laser radar device for environmental measurement used for observation of the atmosphere, sea water, or the like. Patent Literature 1 discloses a laser radar apparatus capable of simultaneously measuring 3 wavelengths (fundamental, double and triple waves) of a YAG (yttrium aluminum garnet) laser. In this laser radar device, the YAG laser light emitted from the light source is separated into a light having each wavelength by using a dichroic mirror, and is synthesized after the beam diameter is expanded for each wavelength by using a beam expander. The laser radar device irradiates the synthesized laser light toward the sky or the like as a transmission beam.

Patent Literature 2 discloses an obstacle detection apparatus using LiDAR. The obstacle detection apparatus described in Patent Literature 2 is mounted on a vehicle such as an automobile. The obstacle detection apparatus transmits beam-shaped probe waves toward the traveling direction of the vehicle and receives reflected waves of the probe waves. The obstacle detection apparatus scans the probe waves in the lateral direction with respect to the traveling direction of the vehicle, and captures an obstacle in front of the vehicle. When an obstacle is caught, the obstacle detection apparatus changes the transmission direction of the probe waves in accordance with the movement of the obstacle, and makes the probe waves follow the obstacle.

Patent Literature 2 discloses that, in addition to the above described probe waves, other probe waves having a wide angle are transmitted toward a range wider than the scanning range of the above described probe waves. The above described probe waves are used to detect a leading vehicle ahead of the vehicle, and the other probe waves are used to detect a vehicle cutting in front of the vehicle from a lateral direction of the vehicle.

Patent Literature 3 relates to a device for optical distance measurement in geodetic and industrial surveying.

Patent Literature 4 relates to a method for identifying an edge of a crop.

### Citation List

### Patent Literature

[Patent Literature 1] Japanese Unexamined Patent Application Publication No. 2000 -206246
[Patent Literature 2] Japanese Unexamined Patent Application Publication No. H10 -148675
[Patent Literature 3] US 6 411 371 B1
[Patent Literature 4] US 2005/088643 A1

### Summary of Invention

### Technical Problem

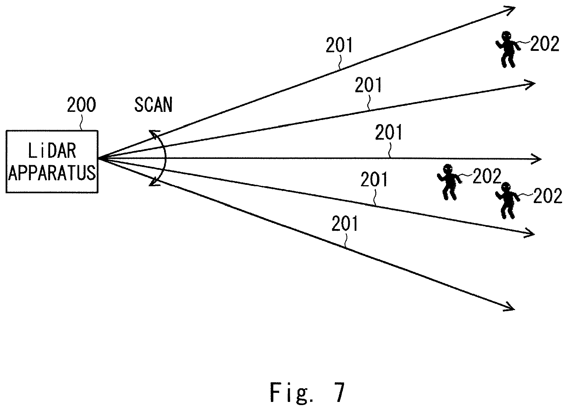

Fig. 7 shows an example in which a LiDAR device is used for monitoring intruders. The LiDAR apparatus 200 transmits laser beams 201 to an area to be monitored. The LiDAR apparatus 200 scans the laser beams 201 in the area to be monitored and receives the reflected light reflected by a person 202 to detect the person 202 in the area to be monitored.

In the LiDAR apparatus 200, when there is any object within the range of the laser beams transmitted (irradiated) from the LiDAR apparatus 200, the reflected light is received, and the presence or absence of an object and the distance to an object are detected. When the laser beams transmitted from the LiDAR apparatus 200 is scanned at a constant angle, the scan density decreases with increasing distance, and the possibility of the laser beam not hitting the person 202 and passing through the person increases.

In particular, when the beam diameter of the laser beam 201 is small, since the range within which the laser beam 201 is irradiated is narrow, the possibility of the laser beam 201 passing through a person increases. To solve this problem, when the laser beam 201 is finely scanned, the scanning density can be increased, and thus the possibility of the laser beam 201 having a small beam diameter passing through a person 202 or the like can be reduced. However, in this case, the time required for scanning the area to be monitored becomes long, and thus there is a problem that the real-time performance is impaired.

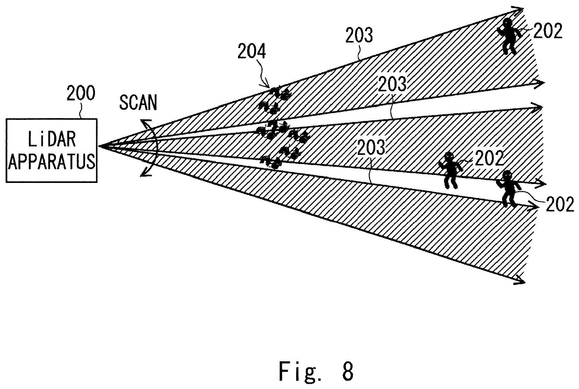

Fig. 8 shows another example in which a LiDAR device is used for monitoring an intruder. In Fig. 8, the LiDAR apparatus 200 transmits a laser beam 203 having a diameter larger than that of the laser beam 201 used in Fig. 7 to an area to be monitored. When the beam diameter of the laser beam is large, the laser beam can be irradiated in a wider range comparing to a case where the beam diameter is small, so that the possibility of the laser beam passing through a person can be reduced.

However, when the thick laser beam 203 is used, floating objects 204 in the air such as snow, dust, fallen leaves or the like are irradiated with the laser beam 203 and the reflected light may be received. In this case, the LiDAR apparatus 200 can detect the presence of an object but cannot determine whether the object is a mass of a certain size or a sparse set of small objects. Therefore, there is a possibility that the floating objects 204 in the air will be erroneously detected as being the person 202.

In Patent Literature 1, the beam diameters of three laser beams of a fundamental wave, a double wave, and a triple wave are respectively enlarged by using a beam expander and irradiated to the sky or the like. However, Patent Literature 1 does not describe how to enlarge the beam diameter of each laser beam. Further, in Patent Literature 1, an independent measurement is performed for each of the three wavelengths. Thus, the laser radar apparatus disclosed in Patent Literature 1 cannot extract features of a detected object, and therefore does not provide a means for solving the above problem.

Further, in Patent Literature 2, a thin probe wave (first probe wave) for searching a narrow range and a thick probe wave (second probe wave) for searching a wide range are used for monitoring the front of a vehicle. However, in Patent Literature 2, the second probe wave is merely used for detecting a vehicle that is cutting in front of the vehicle from an adjacent lane or the like. Therefore, as in the case of Patent Literature 1, Patent Literature 2 does not provide any means for solving the above problem.

In view of the foregoing, one of the objects of the present disclosure is to provide an optical monitoring apparatus and method capable of extracting features of an object present in an area to be monitored.

### Solution to Problem

The present invention is defined in the claims. In order to the above problems, the present disclosure provides an optical monitoring apparatus as defined in claim 1.

Further, the present disclosure provides an optical monitoring method as defined in claim 13.

### Advantageous Effects of Invention

The optical monitoring apparatus and method according to the present disclosure can extract features of objects present in an area to be monitored.

### Brief Description of Drawings

Fig. 1 is a block diagram illustrating a schematic optical monitoring apparatus of the present disclosure.
Fig. 2 is a block diagram illustrating an optical monitoring apparatus according to a first embodiment of the present disclosure.
Fig. 3A is a schematic diagram showing an example of monitoring an area to be monitored using an optical monitoring apparatus.
Fig. 3B is a schematic diagram showing another example of monitoring an area to be monitored using an optical monitoring apparatus.
Fig. 3C is a schematic diagram showing still another example of monitoring an area to be monitored using an optical monitoring apparatus.
Fig. 4 is a schematic diagram illustrating another example of monitoring an area to be monitored using an optical monitoring apparatus.
Fig. 5 is a flow chart illustrating an operational procedure in an optical monitoring apparatus.
Fig. 6 is a block diagram illustrating an optical monitoring apparatus according to a second embodiment of the present disclosure.
Fig. 7 is a schematic diagram showing an example of using a LiDAR device to monitor intruders.
Fig. 8 shows another example of using a LiDAR device for intruder monitoring.

### Description of Embodiments

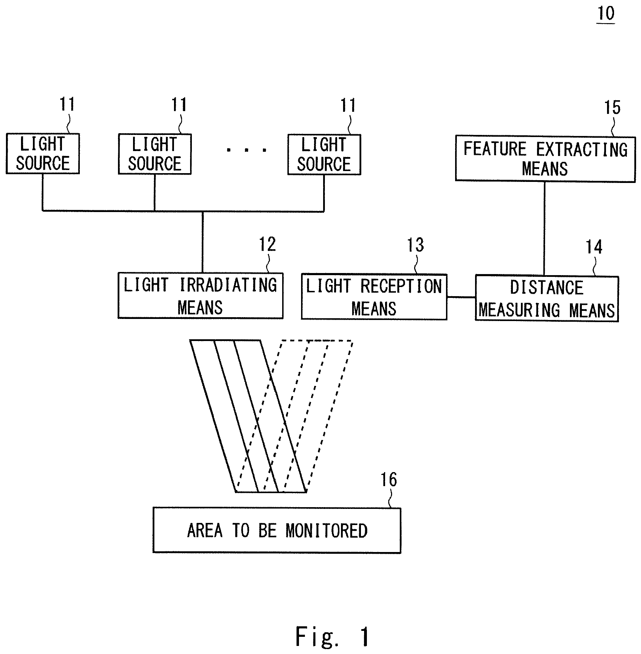

Prior to describing embodiments of the present disclosure, an overview of the present disclosure will be described. Fig. 1 shows a schematic optical monitoring apparatus of the present disclosure. The light monitoring apparatus 10 includes a plurality of light sources 11, a light irradiating means 12, a light reception means 13, a distance measuring means 14, and feature extracting means 15.

The plurality of light sources 11 emit light respectively. The light irradiating means 12 irradiates a plurality of lights emitted from the plurality of light sources 11 to an area to be monitored 16. At this time, the light irradiating means 12 irradiates at least one of the plurality of lights and at least one of the other lights to the area to be monitored 16 with mutually different beam diameters. In other words, the light irradiating means 12 irradiates a plurality of lights including two lights having mutually different beam diameters to the area to be monitored 16.

The light reception means 13 receives reflected light, which is incident from the area to be monitored 16, for each of the plurality of lights irradiated from the light irradiating means 12. The distance measuring means 14 measures the distance to the object present in the area to be monitored 16 based on the reflected light received by the light reception means 13 for each of the plurality of lights irradiated by the light irradiating means 12. The feature extracting means 15 extracts the feature of the object present in the area to be monitored 16 based on the results of distance measurement of the plurality of lights measured by the distance measuring means 14.

The light monitoring apparatus 10 according to the present disclosure irradiates a plurality of lights including two lights having different beam diameters from the light irradiating means 12 to the area to be monitored 16. The distance measuring means 14 measures the distance to the object based on the respective reflected lights for each of the plurality of lights irradiated by the light irradiating means 12. The feature extraction means 15 extracts a feature of the object based on the results of distance measurement with respect to a plurality of lights. When the beam diameters of the lights irradiated to the area to be monitored 16 are different, the results of distance measurement based on the reflected lights of the plurality of lights irradiated from the light irradiating means 12 can be changed according to the features of the object in the area to be monitored 16. By using a plurality of lights having mutually different beam diameters and by using the results of distance measurement for each of the lights, it is possible to extract features of an object in the area to be monitored.

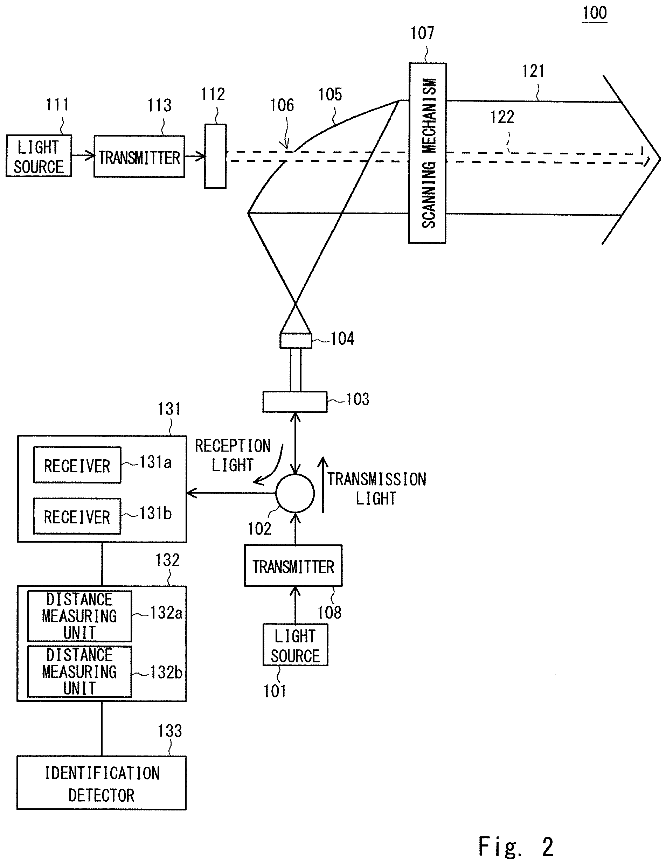

Hereinafter, exemplary embodiments of the present disclosure will be described in detail with reference to the drawings. Fig. 2 shows an optical monitoring apparatus according to a first embodiment of the present disclosure. The optical monitoring apparatus 100 includes a light source 101, a circulator 102, a collimator lens 103, a convex lens 104, a mirror 105, a scanning mechanism 107, a transmitter 108, a light source 111, a collimator lens 112, a transmitter 113, an optical receiver 131, a distance measuring unit 132, and an identification detector 133. The optical monitoring apparatus 100 may be used, for example, in an important facility for the purpose of detecting intrusion of a person, an automobile, or the like. Alternatively, the light monitoring apparatus 100 may be used to monitor drones, birds, etc., at airports or the like.

The light source (first light source) 101 and the light source (second light source) 111 emit light of a predetermined wavelength, respectively. The light sources 101 and 111 include, for example, a semiconductor laser, respectively. The wavelength of the light emitted from the light source 101 and the wavelength of the light emitted from the light source 111 may be different from each other. The transmitter 108 generates predetermined distance measuring signals which are optical signals from the light emitted from the light source 101, and transmits the distance measuring signals. The transmitter 113 generates predetermined distance measuring signals which are optical signal from the light emitted from the light source 111, and transmits the distance measuring signals. The transmitters 108 and 113 transmit, for example, pulsed laser lights as distance measuring signals, respectively. Alternatively, one of the transmitters 108 and 113 may emit pulsed laser lights as distance measuring signals, and the other may emit continuous oscillation lights (CW (Continuous Wave) lights) as distance measuring signals. The types of the light transmitted by the transmitters 108 and 113 are determined in accordance with the distance measuring method in the distance measuring unit 132. For example, a Time of Flight (ToF) measurement method is known as a distance measurement method using pulsed laser lights. Further, an FMCW (Frequency Modulated CW) method is known as a distance measuring method using CW lights. The light sources 101 and 111 correspond to the light source 11 shown in Fig. 1.

The light emitted from the light source 101 (the transmitter 108) enters the circulator 102. The circulator 102 passes the light incident from the light source 101 side to the collimator lens 103 side. The collimator lens 103 collimates the light incident from the light source 101 side. The convex lens 104 emits the collimated light incident from the collimator lens 103 side as the convergent light. The mirror 105 reflects the light passing through the convex lens 104 toward the area to be monitored, and emits it as a transmission beam 121. For example, a parabolic mirror is used for the mirror 105. The mirror 105 irradiates, for example, the transmission beam 121 of a collimated light to the area to be monitored. The convex lens 104 and the mirror 105 also function as a beam expander and enlarge the beam diameter of the light collimated by the collimating lens 103.

The light emitted from the light source 111 (the transmitter 113) enters the collimator lens 112. The collimator lens 112 collimates the light incident from the light source 111 side. The mirror 105 is provided with an aperture 106 or a slit. The collimated light emitted from the collimator lens 112 passes through the aperture 106 or the slit and is emitted toward the area to be monitored as a transmission beam 122.

In the present embodiment, the beam diameter of the transmission beam 121 and the beam diameter of the transmission beam 122 are different from each other. In Fig. 2, the beam diameter of the transmission beam 122 is smaller than the beam diameter of the transmission beam 121. For example, the aperture 106 is formed at the position of the optical axis of the transmission beam 121, and the mirror 105 emits the transmission beams 121 and 122 to the area to be monitored with their respective optical axes aligned. Note that the transmission beams 121 and 122 do not necessarily have to be emitted to the object to be monitored as collimated parallel lights. At least one of the transmit beams 121 and 122 may be emitted, for example, as a beam whose diameter intentionally increases with increasing distance.

The scanning mechanism 107 scans the transmission beams 121 and 122 in the area to be monitored. The scanning mechanism 107 includes, for example, optical elements such as a lens, a prism, and a mirror, and uses the optical elements to change the irradiation direction of the transmission beams 121 and 122 incident from the mirror 105 side. For example, the scanning mechanism 107 simultaneously emits the transmission beam 121 and the transmission beam 122 in the same direction of the area to be monitored for each scanning. The convex lens 104, the mirror 105, and the scanning mechanism 107 correspond to the light irradiating means 12 shown in Fig. 1.

To the mirror 105, reflected lights of each of the transmission beams 121 and 122 are incident from the area to be monitored side and the mirror 105 reflects the reflected lights to the convex lens 104 side. The reflected lights pass through the convex lens 104 and the collimator lens 103 and enters the circulator 102. The circulator 102 emits the reflected lights incident from the collimator lens 103 side toward the optical receiver 131. The circulator 102 functions as a light separating means for separating a light (transmission light) entering from the light source 101 side and going toward the area to be monitored from a light (reception light) entering from the area to be monitored.

The optical receiver 131 detects (receives) the reflected lights of the transmission beams 121 and 122 incident through the circulator 102. The optical receiver 131 includes a receiver 131a and a receiver 131b. For example, a light reception element such as a photodetector may be used in the receivers 131a and 131b. The receiver 131a receives the reflected light for the transmission beam 121. The receiver 131b receives the reflected light for the transmission beam 122. When the wavelength of the transmission beam 121 and the wavelength of the transmission beam 122 are different from each other, the reflected light for the transmission beam 121 and the reflected light for the transmission beam 122 are separated by using, for example, an optical filter such as a low-pass filter, a band-pass filter, or a high-pass filter. Alternatively, when the distance is measured by using different distance measuring methods for the reflected light for the transmission beam 121 and the reflected light for the transmission beam 122, the reflected light for the transmission beam 121 and the reflected light for the transmission beam 122 may be separated by using the respective characteristics of the signal waveform and the frequency component. The receivers 131a and 131b respectively output electric signals corresponding to the amounts of the received reflected light to the distance measuring unit 132 of the subsequent stage. An analog-to-digital (AD) converter may be arranged between the receivers 131a and 131b and the distance measuring unit 132, and the AD converter may convert an analog electric signal corresponding to the amount of the detected reflected light into a digital signal. In this case, the distance measuring unit 132 receives a digital signal indicating the amount of the reflected light. The optical receiver 131 corresponds to the light reception means 13 shown in Fig. 1.

The distance measuring unit 132 measures, for each of the transmission beams 121 and 122, the distance to an object present in the area to be monitored based on the reflected lights detected by the optical receiver 131. The distance measuring unit 132 includes a distance measuring unit 132a and a distance measuring unit 132b. The distance measuring unit 132a measures the distance to the object based on the reflected light of the transmission beam 121 detected by the receiver 131a. The distance measuring unit 132b measures the distance to the object based on the reflected light of the transmission beam 122 detected by the receiver 131b. The distance measuring units 132a and 132b may measure the distance to the object using mutually different distance measuring methods. The distance measuring unit 132 corresponds to the distance measuring means 14 shown in Fig. 1.

The identification detector 133 extracts the features of the object present in the area to be monitored based on the results of distance measurement on the basis of the reflected lights for the transmission beams 121 and 122 measured by the distance measuring unit 132. That is, the identification detector 133 extracts the feature of the object based on the result of distance measurement of the distance measuring unit 132a and the result of distance measurement of the distance measuring unit 132b. The identification detector 133 corresponds to the feature extracting means 15 shown in Fig. 1.

Although an example in which the optical receiver 131 includes the receivers 131a and 132b has been described above, the optical receiver 131 does not necessarily include a plurality of receivers such as the receivers 131a and 132b. The optical receiver 131 may be configured as a broadband receiver, and the receiver may be used to receive both of the reflected light for the transmission beam 121 and the reflected light for the transmission beam 122. In this case, an electric filter or the like may be arranged the subsequent stage of the optical receiver 131, and the electric signal corresponding to each of the reflected lights may be separated by using the electric filter. In a case where an AD converter is arranged between the optical receiver 131 and the distance measuring unit 132, the digital signals corresponding to the respective reflected lights may be separated by using a digital filter in the subsequent stage of the AD converter.

Here, since the beam diameter of the transmission beam 122 is smaller than the beam diameter of the transmission beam 121, the transmission beam 122 may pass through the scattered objects. In contrast, since the beam diameter of the transmission beam 121 is large, the transmission beam 121 is responsive to floating objects or the like in the air, and the possibility of the transmission beam passing through the object is low. In the present embodiment, the results of distance measurement of these two transmission beams are combined, and whereby the feature of the object in the area to be monitored is extracted.

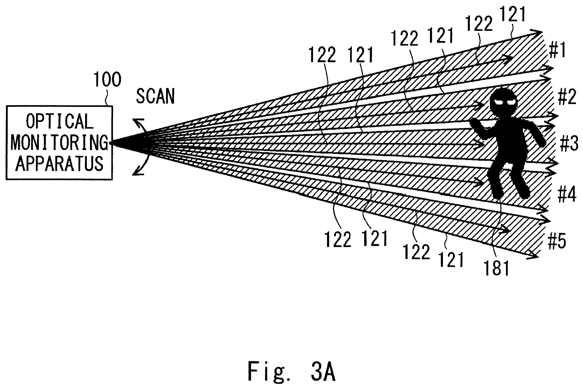

Figs. 3A-3C schematically illustrate examples of monitoring the area to be monitored using the optical monitoring apparatus 100. In the examples shown in Figs. 3A-3C, the optical monitoring apparatus 100 simultaneously irradiates the transmission beam 121 having a large beam diameter and the transmission beam 122 having a small beam diameter to the area to be monitored in 5 scanning directions #1 to #5. The optical monitoring apparatus 100 acquires the result of distance measurement (result of object detection) using the transmission beam 121 and the result of distance measurement using the transmission beam 122 for each scanning direction. Although the optical axes of the transmission beam 121 and the transmission beam 122 coincide with each other, since the light irradiation ranges thereof are different from each other, results of distance measurement may be different for the transmission beam 121 and the transmission beam 122.

Fig. 3A shows a case where there is an invading object (intruder) 181 such as a human being or an automobile in the area to be monitored. An invading object (intruder) such as a human being or an automobile is a mass of a certain size and has a shape. In the example shown in Fig. 3A, in scan directions #1 and #5, neither the transmit beam 121 nor the transmission beam 122 is irradiated to the intruder 181. In this case, in the scanning directions #1 and #5, no object is detected for both of the transmission beams 121 and 122. On the other hand, in the scanning directions #2 to #4, both of the transmission beams 121 and 122 are irradiated to the intruder 181. In this case, in the scanning directions #2 to #4, an object is detected by both of the transmission beams 121 and 122. As in this example, when an object is detected by both of the two transmit beams 121 and 122 in the two adjacent scanning directions, the object present in the area to be monitored can be determined to be an intruder 181 having a certain size.

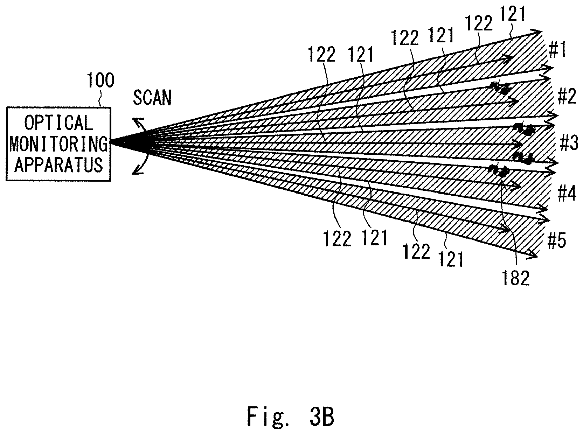

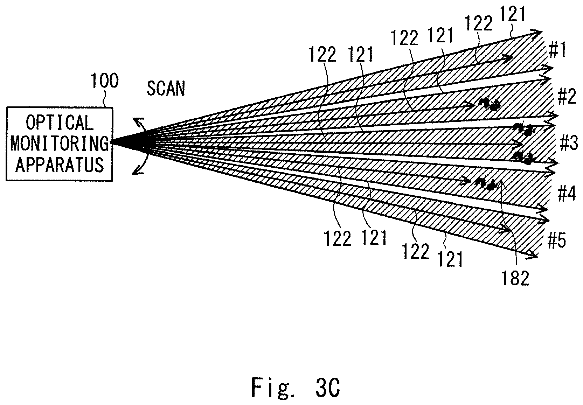

Figs. 3B and 3C show a case where there are floating objects 182 in the air such as fallen leaves in the area to be monitored. The floating objects 182 in the air, such as fallen leaves, are a collection of small objects and are scattered to some extent. That is, the floating objects 182 may be a sparse mass of small objects.

In the example shown in Fig. 3B, in the scanning directions #1 and #5, neither the transmission beam 121 nor the transmission beam 122 is irradiated to the floating objects 182. In this case, in the scanning directions #1 and #5, no object is detected by both of the transmission beams 121 and 122. On the other hand, in the scanning directions #2 to #4, only the transmission beam 121 of the transmission beams 121 and 122 is irradiated to the floating objects 182. In this case, in the scanning directions #2 to #4, an object is detected by the transmission beam 121. At this time, in the scanning directions #2 to #4, the transmission beam 122 passes through the floating objects 182. In this case, no object is detected for the transmission beam 122 in the scanning directions #2 to #4.

In the example shown in Fig. 3C, in the scanning directions #1 and #5, similar to the above examples, neither the transmission beam 121 nor the transmission beam 122 is irradiated to the floating objects 182. In this case, in the scanning directions #1 and #5, no object is detected by both of the transmission beams 121 and 122. On the other hand, in the scanning directions #2 and #4, both of the transmission beams 121 and 122 are irradiated to the floating objects 182. In this case, in the scanning directions #2 and #4, an object is detected by both of the transmission beams 121 and 122. At this time, in the scanning direction #3, only the transmission beam 121 of the transmission beams 121 and 122 is irradiated to the floating objects 182, and the transmission beam 122 passes through the floating objects 182. In this case, in the scanning direction #3, an object is detected by the transmission beam 121, and no object is detected by the transmission beam 122.

When the object present in the area to be monitored is a sparse mass of small objects such as the floating objects 182, when the transmission beams are scanned, the transmission beam 122 having a small beam diameter may pass through the floating objects 182 in some of the scanning directions. Therefore, when two adjacent scanning directions are considered, an object may be detected by the transmission beam 122 in one scanning direction, while an object may not be detected by the transmission beam 122 in the other scanning direction. In contrast, with respect to the transmission beam 121 having a large beam diameter, an object is detected in each scanning direction. Therefore, when the transmission beams are scanned in a plurality of scanning directions, an object that is detectable by the transmission beam 121 having a large beam diameter, but is partially undetectable by the transmission beam 122 having a small beam diameter can be determined to be a scattered collection of small objects such as floating objects 182 in the air.

As can be seen from the above, the identification detector 133 extracts the feature of the size of the object present in the area to be monitored based on the result of distance measurement on the basis of the reflected light of the transmission beam 121 having a large beam diameter and the result of distance measurement on the basis of the reflected light of the transmission beam 122 having a small beam diameter, which are respectively irradiated in a plurality of directions. The identification detector 133 extracts, for example, a feature that there is a lumpy object having a certain size in the area to be monitored when results of distance measurement are obtained for both of the transmission beams 121 and 122 in each of a plurality of adjacent scanning directions. The identification detector 133 extracts a feature that there is a sparse set of small objects when a result of distance measurement is obtained in each of a plurality of adjacent scanning directions by the transmission beam 121 but a result of distance measurement is not obtained in some of the plurality of scanning directions by the transmission beam 122.

Here, when the transmission beam 122 having a small beam diameter is scanned at a high density in a predetermined scanning range, the detailed shape of the object can be recognized, and whether the detected object is an intruder or floating objects can be determined. However, in that case, the time required for scanning per time becomes longer, and the repetition period of scanning becomes longer. On the other hand, if the scanning density of the transmission beam 122 is lowered, the repetition period can be shortened, but the detailed shape of the object cannot be recognized. In the present embodiment, by using two transmission beams having different beam diameters, even when the scanning density is lowered to some extent, it is possible to distinguish a mass having a certain size from a sparse mass of small objects such as floating objects.

In Fig. 3A, when both of the two transmission beams having different beam diameters detect an object in 2 or more consecutive scanning directions, it is determined that there is an intruder (a large mass). However, Fig. 3A schematically shows the simplest determination method for simplification of explanation, and the determination method is not limited to the above-described method. In the present embodiment, if the determination criteria are suitably adjusted in accordance with the size of the object to be monitored and the scanning density of the transmission beam, it is possible to identify the object with a certain scanning density without increasing the scanning density so as to impair the real-time performance.

Alternatively or additionally, the identification detector 133 may extract features about the surface roughness of an object present in the area to be monitored based on results of distance measurement on the basis of the transmit beams 121 and 122 irradiated in a plurality of directions. For example, when the surface of the object is rough, it is considered that, with respect to the transmission beam 122 having a small beam diameter, the result of distance measurement or the reflection intensity (luminance information) largely changes in accordance with the scanning position. On the other hand, when the surface of the object is not rough, with respect to the transmission beam 122, even if the scanning position is changed, it is considered that the result of distance measurement or the reflection intensity does not largely change. Further, it is considered that the result of distance measurement on the basis of the transmission beam 121 having a large beam diameter does not depend on the surface roughness of the object. Therefore, by using the result of distance measurement on the basis of the transmission beams 121 and 122, it is considered that a feature of the surface roughness of the object can be extracted.

Furthermore, alternatively or additionally to the above, the identification detector 133 may extract a feature as to whether or not an object present in the area to be monitored is moving based on the result of distance measurement on the basis of the transmission beam 121 and the result of distance measurement on the basis of the transmission beam 122. For example, the optical monitoring apparatus 100 emits the transmission beams 121 and 122 multiple times. The identification detector 133 may extract a feature that an object is moving when, for example, a result of distance measurement is obtained for both of the transmission beams 121 and 122 at a certain time, and a result of distance measurement is not obtained for the transmission beam 122 having a small beam diameter at a later time.

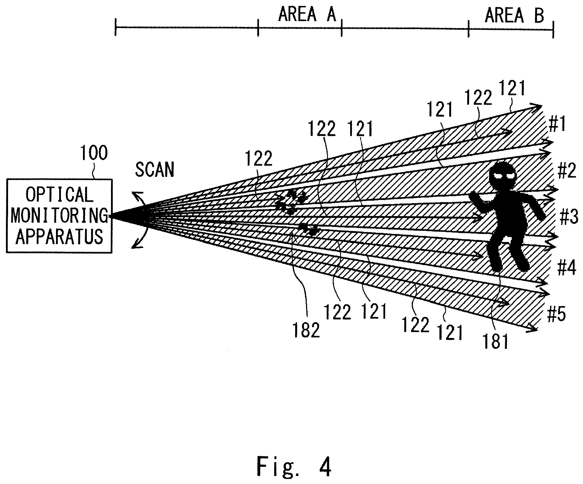

It should be noted that although the description above has been made that the feature of an object is extracted depending on whether there is an object in the area to be monitored or not, the identification detector 133 may extract the feature of an object also using information on the distance to the detected object. Fig. 4 schematically shows another example of monitoring an area to be monitored using the optical monitoring apparatus 100. In Fig. 4, there are an intruder 182 and floating objects 182 in the area to be monitored. In the area to be monitored, there are the floating objects 182 in the area A on the front side as viewed from the optical monitoring apparatus 100, and there is the intruder 181 in the area B on the rear side.

In the example shown in Fig. 4, in the scanning directions #1 and #5, neither the transmit beam 121 nor the transmission beam 122 is irradiated to the intruder 181 nor the floating objects 182. In this case, in the scanning directions #1 and #5, the result of distance measurement is not obtained in both of the transmission beams 121 and 122. In the scanning direction #2, the transmission beam 121 having a large beam diameter is irradiated to the intruder 181 and the floating objects 182, while the transmission beam 122 having a small beam diameter is irradiated only to the floating objects 182 on the front side. In this case, for the transmission beam 121, a result of distance measurement corresponding to the intruder 181 and a result of distance measurement corresponding to the floating objects 182 are obtained. On the other hand, for the transmission beam 122, a result of distance measurement corresponding to the floating objects 182 is obtained.

In the scanning directions #3 and #4, the transmission beam 121 having a large beam diameter is irradiated to the intruder 181 and the floating objects 182 as in the scanning direction #2. At this time, the transmission beam 122 having a small beam diameter passes through the floating objects 182 on the front side, and only the intruder 181 on the back side is irradiated. In this case, for the transmission beam 121, a result of distance measurement corresponding to the intruder 181 and a result of distance measurement corresponding to the floating objects 182 are obtained. For the transmission beam 122, a result of distance measurement corresponding to the intruder 181 is obtained.

The identification detector 133 divides, for example, the area to be monitored into a plurality of areas according to the distance from the optical monitoring apparatus 100. The identification detector 133 extracts a feature of an object present in each area based on the result of distance measurement about the transmission beam 121 and the result of distance measurement about the transmission beam 122. For example, in the case of Fig. 4, for the transmission beam 121 having a large beam diameter, results of distance measurement are obtained in the areas A and B in the scanning directions #2 to #4. With respect to the transmission beam 122 having a small beam diameter, a result of distance measurement is obtained in the area A on the front side in the scanning direction #2, and a result of distance measurement is obtained in the area B on the rear side in the scanning directions #3 and #4. In this case, for the area A, since the result of distance measurement is not obtained for the transmission beam 122 in the two adjacent scanning directions, the identification detector 133 extracts the feature that there is a sparse collection of small objects. On the other hand, for the area B, since the results of distance measurement are obtained for the transmission beam 122 in the two adjacent scanning directions, the identification detector 133 extracts the feature that there is a lumpy object having a certain size. As in this example, the feature of the object may be extracted for each distance range using the results of distance measurement.

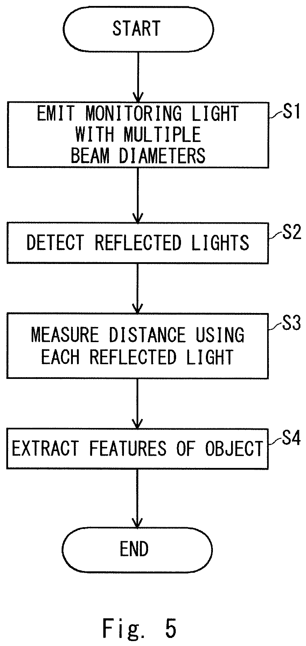

Next, the operation procedure will be described. Fig. 5 shows an operation procedure in the optical monitoring apparatus 100. The transmitters 108 and 113 transmit distance measuring signals such as pulsed laser lights from the light emitted from the light source 101 and the light source 111, respectively. The mirror 105 emits the light transmitted from the transmitters 108 and 113 to the area to be monitored as transmission beams 121 and 122, respectively (Step S1). In step S1, the mirror 105 irradiates the transmission beams 121 and 122 to the area to be monitored with mutually different beam diameters.

The optical receiver 131 detects the reflected lights of the transmission beams 121 and 122 reflected in the area to be monitored (Step S2). In step S2, the receiver 131a detects the reflected light of the transmission beam 121, and the receiver 131b detects the reflected light of the transmission beam 122. The distance measuring unit 132 detects the distance to the object based on the reflected lights of the transmission beams 121 and 122 detected in step S2 (Step S3). In step S3, the distance measuring unit 132a measures the distance based on the reflected light detected by the receiver 131a, and the distance measuring unit 132b measures the distance based on the reflected light detected by the receiver 131b.

The identification detector 133 extracts the feature of the object in the area to be monitored based on the results of distance measurement obtained in step S3 (Step S4). In step S4, for example, the identification detector 133 compares the result of distance measurement of the distance measuring unit 132a with the result of distance measurement of the distance measuring unit 132b, and extracts the feature of the object based on the combination of the results of distance measurement.

In the present embodiment, the optical monitoring apparatus 100 emits two transmission beams 121 and 122 having different beam diameters to the area to be monitored. The identification detector 133 extracts the feature of the object based on the result of distance measurement on the basis of the reflected light of the transmission beam 121 and the result of distance measurement on the basis of the reflected light of the transmission beam 122. When the beam diameters of the lights irradiated to the area to be monitored are different from each other, the results of distance measurement may change depending on the thickness (thinness) of the beam diameter. In the present embodiment, the feature of the object is extracted from the two results of distance measurement by utilizing such a property. Thus, for example, the size of the detected object can be determined.

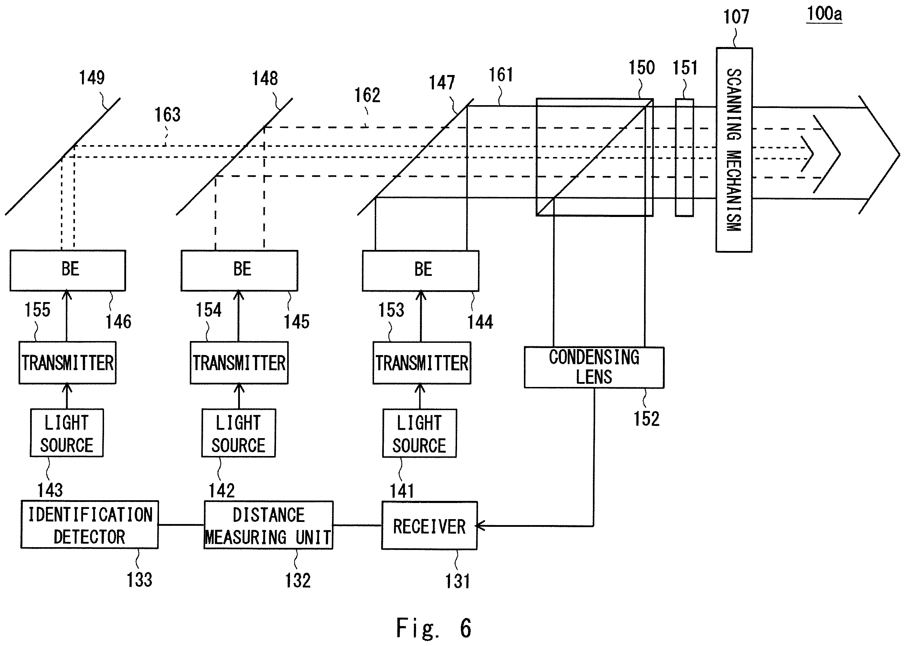

Next, a second embodiment of the present disclosure will be described. Fig. 6 shows an optical monitoring apparatus according to a second embodiment of the present disclosure. The optical monitoring apparatus 100a includes three light sources 141 to 143, three transmitters 153 to 155, three beam expanders 144 to 146, three beam combiners 147 to 149, a polarizing beam splitter 150, a 1/4 wavelength plate 151, a condenser lens 152, a scanning mechanism 107, an optical receiver 131, a distance measuring unit 132, and an identification detector 133. The optical monitoring apparatus 100a according to the present embodiment uses three transmission beams 161 to 163 to extract features of an object in an area to be monitored.

Each of the light sources 141 to 143 emits light having a predetermined wavelength. The wavelengths of lights emitted from the light sources are different from each other. The transmitters 153 to 155 generate and transmit distance measuring signals from the lights emitted from the light sources 141 to 143. The beam expander 144 enlarges the beam diameter of the distance measuring signal (light) transmitted by the transmitter 153. The beam expander 145 enlarges the beam diameter of the distance measuring signal (light) transmitted by the transmitter 154. The beam expander 146 enlarges the beam diameter of the distance measuring signal (light) transmitted by the transmitter 155.

The beam combiner 149 reflects the light whose beam diameter is enlarged by the beam expander 146 and emits the light in the direction of the area to be monitored as a transmission beam 163. The beam combiner 148 reflects the light whose beam diameter is enlarged by the beam expander 145 and emits the light in the direction of the area to be monitored as a transmission beam 162. Further, the beam combiner 148 passes the transmission beam 163 and combines the transmission beam 162 with the transmission beam 163. The beam combiner 147 reflects the light whose beam diameter is enlarged by the beam expander 144 and emits the light in the direction of the area to be monitored as a transmission beam 161. Further, the beam combiner 147 passes the transmission beams 162 and 162 and combines the transmission beam 161 with the transmission beams 162 and 163.

For example, a half mirror or a dichroic mirror which reflects lights having the wavelength of the transmission beam 161 and transmits lights having the wavelengths of the transmission beams 162 and 163 is used as the beam combiner 147,. For example, a half mirror or a dichroic mirror which reflects lights having the wavelength of the transmission beam 162 and transmits lights having the wavelength of the transmission beam 163 is used as the beam combiner 148. For example, a normal mirror is used as the beam combiner 149.

In the present embodiment, the beam expanders 144 to 146 enlarge the beam diameter of the incident light at mutually different expansion rates. That is, in the present embodiment, the beam diameters of the transmission beams 161 to 163 are different from each other. The beam diameter of the transmission beam 161 is the thickest, and the beam diameter of the transmission beam 163 is the thinnest. The beam diameter of the transmission beam 162 is intermediate between the beam diameters of the transmission beams 161 and 163. The beam combiners 147 to 149 are arranged so that the respective optical axes coincide with each other. The beam combiner 147 emits the transmission beams 161 to 163 toward the area to be monitored in a state in which the respective optical axes are aligned with each other. In the present embodiment, the beam expanders 144 to 146 and the beam combiners 147 to 149 correspond to the light irradiating means 12 shown in Fig. 1.

The polarization beam splitter 150 passes through lights in a predetermined polarization direction and reflects lights in a polarization direction orthogonal to the predetermined polarization direction. For example, the light sources 141 to 143 emit light having a predetermined polarization plane, and the polarization beam splitter 150 passes through the transmission beams 161 to 163 having the predetermined polarization plane to the area to be monitored side. The optical monitoring apparatus 100a may further include a polarization plate on the optical path from the light sources 141 to 143 to the polarization beam splitter 150, which aligns the polarization plane of the light in the predetermined direction. The 1/4 wavelength plate 151 rotates the polarization plane of the transmission beams 161 to 163 by λ/4 and emits the light toward the area to be monitored. The scanning mechanism 107 scans the transmission beams 161 to 163 in the area to be monitored.

On the 1/4 wavelength plate 151, reflected lights of the transmission beams 161 to 163 are incident from the area to be monitored. The 1/4 wavelength plate 151 rotates the polarization plane of the reflected lights of the transmission beams 161 to 163 by λ/4 and emits the lights toward the polarization beam splitter 150. The polarization plane of the light incident on the polarization beam splitter 150 from the 1/4 wavelength plate 151 side is rotated by 90° with respect to the polarization plane of the light incident from the beam combiner 147. The polarization beam splitter 150 reflects the reflected lights of the transmission beams 161 to 163 incident from the 1/4 wavelength plate 151 side to the condenser lens 152 side. In the present embodiment, the polarization beam splitter 150 and the 1/4 wavelength plate 151 constitute an optical separation means for separating the transmission light and the reception light. Instead of using the polarization beam splitter 150, a half mirror which reflects a part of the light and passes through the part of the light may be used as the light separating means. In this case, the 1/4 wavelength plate 151 is unnecessary.

The condensing lens 152 condenses the reflected lights of the transmission beams 161 to 163 on the light detection surface of the optical receiver 131. The optical receiver 131 detects (receives) the reflected lights of the transmission beams 161 to 163. The distance measuring unit 132 measures, for each of the transmission beams 161 to 163, the distance to an object present in the area to be monitored based on the reflected lights detected by the optical receiver 131. The identification detector 133 extracts the features of the object present in the area to be monitored based on the results of distance measurements on the basis of the reflected lights of the transmission beams 161 to 163 measured by the distance measuring unit 132. The optical receiver 131, the distance measuring unit 132, and the identification detector 133 may be the same as those described in the first embodiment except that the number of reflected lights to be handled and the number of results of distance measurement are increased to 3.

In the present embodiment, the optical monitoring apparatus 100a irradiates three transmission beams 161 to 163 to the area to be monitored. The identification detector 133 extracts a feature of an object based on the results of distance measurement on the basis of each reflected light of the transmission beams 161 to 163. In the embodiment, the number of transmission beams used for feature extraction is increased to three, and detailed features of an object can be extracted as compared with the first embodiment in which two transmission beams are used. Other effects are the same as those of the first embodiment. In particular, feature extracting means that extracts a feature with respect to a size of an object, as disclosed in the appended independent claims, is common to all embodiments.

In the first embodiment, an example has been described in which the transmission beam is collimated by using a collimating lens, but the present invention is not limited thereto. In each of the above embodiments, the transmission beam emitted to the area to be monitored is not limited to the collimated light, but may be a converging light or a diverging light. In the first embodiment, an example has been described in which a circulator is used for separating the transmission light and the reception light, but the present invention is not limited thereto. In the first embodiment, it is also possible to separate the transmission light and the reception light by using a polarization beam splitter and a 1/4 wavelength plate. Alternatively, the transmission light and the reception light can be separated by using a half mirror.

In the first embodiment, an example has been described in which two transmission beams 121 and 122 are used, but the present invention is not limited thereto. In the first embodiment, three or more transmission beams may be irradiated to the area to be monitored. For example, in the optical monitoring apparatus 100, the mirror 105 may be provided with a plurality of apertures 106 or slits through which a plurality of transmission beams can pass, and a plurality of transmission beams having a small beam diameter may be emitted to the area to be monitored through the plurality of apertures 106 or slits. In the second embodiment, an example has been described in which the beam diameters of the three transmission beams 161 to 163 are different from each other but the present invention is not limited thereto. When three or more transmission beams are irradiated to the area to be monitored, the light emitting means 12 (See Fig. 1) may emit one light of the plurality of lights to the area to be monitored with a first beam diameter, and emit the remaining lights of the plurality of lights to the area to be monitored with a second beam diameter smaller than the first beam diameter.

In each of the above embodiments, the processing performed by the distance measuring unit 132 and the identification detector 133 can be implemented using a computer system including an ASIC (Application Specific Integrated Circuit), a DSP (Digital Signal Processor), an MPU (Micro Processing Unit), a CPU (Central Processing Unit), or a combination thereof, which is included in the optical monitoring apparatus 100. Specifically, the functions of the distance measuring unit 132 and the identification detector 133 can be realized by causing the computer system to execute a program including a group of instructions for processing such as calculation for performing distance measurement based on the reflected light and feature extraction based on a plurality of results of distance measurement.

In the above described examples, the program may be stored using various types of non-transitory computer readable media and provided to the computer. Non-transitory computer readable media include any type of non-transitory computer readable media. Examples of non- transitory computer readable media include magnetic storage media (such as flexible disks, magnetic tapes, and hard disk drives), optical magnetic storage media (e.g. magneto-optical disks), CD-ROM (Read Only Memory), CD-R, CD-R/W, and semiconductor memories (such as mask ROM, PROM (programmable ROM), EPROM (erasable PROM), flash ROM, RAM (Random Access Memory)). Further, the program(s) may be provided to a computer using any type of transitory computer readable media. Examples of transitory computer readable media include electrical signals, optical signals, and electromagnetic waves. Transitory computer readable media can provide the program(s) to a computer via a wired communication line (e.g., electric wires, and optical fibers) or a wireless communication line.

While the present disclosure has been described above with reference to embodiments, the present disclosure is not limited by the above embodiments. The structure and details of the disclosure may be modified in a variety of ways as will be understood by those skilled in the art as long as the structure and details fall within the scope of protection as defined by the appended claims.

### Reference Signs List

- 10: OPTICAL MONITORING APPARATUS
- 11: LIGHT SOURCE
- 12: LIGHT IRRADIATING MEANS
- 13: LIGHT RECEPTION MEANS
- 14: DISTANCE MEASURING MEANS
- 15: FEATURE EXTRACTING MEANS
- 16: AREA TO BE MONITORED
- 100: OPTICAL MONITORING APPARATUS
- 101, 111, 141 to 143: LIGHT SOURCE
- 102: CIRCULATOR
- 103,112: COLLIMATE LENS
- 104: CONVEX LENS
- 105: MIRROR
- 106: APERTURE
- 107: SCANNING MECHANISM
- 108, 113, 153 to 155: TRANSMITTER
- 121, 122, 161 to 163: TRANSMISSION BEAM
- 131: OPTICAL RECEIVER
- 132: DISTANCE MEASURING UNIT
- 133: IDENTIFICATION DETECTOR
- 144 to 146: BEAM EXPANDER
- 147 to 149: BEAM COMBINER
- 150: POLARIZATION BEAM SPLITTER
- 151: 1/4 WAVELENGTH PLATE
- 152: CONDENSING LENS

## Claims

1. An optical monitoring apparatus comprising:
a plurality of light sources;
light irradiating means for irradiating a plurality of lights, optical axes of which are coincide with each other, emitted from the plurality of light sources to an area to be monitored, wherein the light irradiating means irradiates at least one of the plurality of lights and at least another one of the plurality of lights to the area to be monitored with mutually different beam diameters;
light reception means for receiving reflected lights of the plurality of light beams incident from the area to be monitored;
distance measuring means for measuring, for each of the plurality of lights, a distance to an object present in the area to be monitored based on the reflected lights; and
feature extracting means for extracting a feature of the object present in the area to be monitored based on results of measurement of the distance for the plurality of lights measured by the distance measuring means, and_
wherein the plurality of lights are irradiated toward the area to be monitored in a plurality of directions, and
wherein the feature extracting means extracts a feature with respect to a size of an object present in the area to be monitored based on a result of measurement of the distance, for each of the plurality of directions, for the reflected light of a light irradiated from the light irradiating means with a first beam diameter among the plurality of lights irradiated in a plurality of directions and a result of measurement of the distance, for each of the plurality of directions, for the reflected light of a light irradiated from the light irradiating means with a second beam diameter smaller than the first beam diameter.

2. The optical monitoring apparatus according to claim 1, wherein the plurality of light sources include a first light source for emitting a first light and a second light source for emitting a second light.

3. The optical monitoring apparatus according to claim 2, wherein the distance measuring means includes: a first distance measuring means for measuring a distance to an object present in the area to be monitored based on the reflected light of the first light; and a second distance measuring means for measuring a distance to an object present in the area to be monitored based on the reflected light of the second light.

4. The optical monitoring apparatus according to claim 3, wherein the wavelength of the first light and the wavelength of the second light are different from each other.

5. The optical monitoring apparatus according to any one of claims 1 to 4, wherein the light irradiating means includes a beam combiner for combining lights emitted from the plurality of light sources.

6. The optical monitoring apparatus according to any one of claims 1 to 5, further comprising a light separating means for separating a light irradiated from the light irradiating means to the area to be monitored from the reflected light.

7. The optical monitoring apparatus according to any one of claims 1 to 6,
wherein the feature extracting means extracts a feature with respect to surface roughness of an object present in the area to be monitored based on a result of measurement of the distance, for each of the plurality of directions, for a reflected light of a light irradiated from the light irradiating means with a first beam diameter among the plurality of lights and a result of measurement of the distance, for each of the plurality of directions, for a reflected light of a light irradiated from the light irradiating means with a second beam diameter smaller than the first beam diameter.

8. The optical monitoring apparatus according to any one of claims 1 to 7,
the feature extracting means extracts a feature as to whether an object present in the area to be monitored is moving or not, based on a result of measurement of the distance for a reflected light of a light irradiated from the light irradiating means with a first beam diameter among the plurality of lights irradiated multiple times and a result of measurement of the distance for a reflected light of a light irradiated from the light irradiating means with a second beam diameter smaller than the first beam diameter.

9. The optical monitoring apparatus according to any one of claims 1 to 8, wherein the light irradiating means includes optical scanning means for scanning lights to be irradiated to the area to be monitored.

10. The optical monitoring apparatus according to any one of claims 1 to 9, further comprising a beam expander arranged between the light irradiating means and at least some of the plurality of light sources for expanding a beam diameter of the light emitted from the light source.

11. The optical monitoring apparatus according to any one of claims 1 to 10, further comprising a collimating lens arranged between the light irradiating means and at least some of the plurality of light sources for collimating the light emitted from the light source.

12. The optical monitoring apparatus according to any one of claims 1 to 11, wherein the light irradiating means irradiates the plurality of light to the area to be monitored with mutually different beam diameters.

13. An optical monitoring method comprising:
irradiating a plurality of lights, optical axes of which are coincide with each other, including two lights having mutually different beam diameters to an area to be monitored in a plurality of directions, and
receiving reflected lights of the plurality of lights incident from the area to be monitored;
measuring a distance to an object present in the area to be monitored for each of the plurality of lights based on the reflected light; and
extracting a feature with respect to a size of an object present in the area to be monitored based on a result of measurement of the distance, for each of the plurality of directions, for the reflected light of a light with a first beam diameter among the plurality of lights irradiated in a plurality of directions and a result of measurement of the distance, for each of the plurality of directions, for the reflected light with a second beam diameter smaller than the first beam diameter.

## Patentansprüche

1. Optische Überwachungsvorrichtung, die aufweist:
mehrere Lichtquellen;
eine Lichtabstrahleinrichtung zum Abstrahlen mehrerer Lichter, deren optische Achsen zusammenfallen und die von den mehreren Lichtquellen zu einem zu überwachenden Bereich emittiert werden, wobei die Lichtabstrahleinrichtung mindestens eines der mehreren Lichter und mindestens ein weiteres der mehreren Lichter zu dem zu überwachenden Bereich mit sich voneinander unterscheidenden Strahldurchmessern abstrahlt;
eine Lichtempfangseinrichtung zum Empfangen reflektierter Lichter der mehreren Lichtstrahlen, die von dem zu überwachenden Bereich einfallen;
eine Abstandsmesseinrichtung zum für jedes der mehreren Lichter erfolgenden Messen eines Abstands zu einem in dem zu überwachenden Bereich vorhandenen Objekt auf der Grundlage der reflektierten Lichter; und
eine Merkmalsextraktionseinrichtung zum Extrahieren eines Merkmals des in dem zu überwachenden Bereich vorhandenen Objekts auf der Grundlage von Messergebnissen des Abstands für die mehreren Lichter, der durch die Abstandsmesseinrichtung gemessen wird, und
wobei die mehreren Lichter zu dem zu überwachenden Bereich in mehreren Richtungen abgestrahlt werden, und
wobei die Merkmalsextraktionseinrichtung ein Merkmal im Hinblick auf eine Grö-ße eines in dem zu überwachenden Bereich vorhandenen Objekts auf der Grundlage eines Messergebnisses des Abstands für jede der mehreren Richtungen für das reflektierte Licht eines von der Lichtabstrahleinrichtung abgestrahlten Lichts mit einem ersten Strahldurchmesser unter den in mehreren Richtungen abgestrahlten mehreren Lichtern sowie eines Messergebnisses des Abstands für jede der mehreren Richtungen für das reflektierte Licht eines von der Lichtabstrahleinrichtung abgestrahlten Lichts mit einem zweiten Strahldurchmesser extrahiert, der kleiner als der erste Strahldurchmesser ist.

2. Optische Überwachungsvorrichtung nach Anspruch 1, wobei die mehreren Lichtquellen eine erste Lichtquelle zum Emittieren eines ersten Lichts und eine zweite Lichtquelle zum Emittieren eines zweiten Lichts aufweisen.

3. Optische Überwachungsvorrichtung nach Anspruch 2, wobei die Abstandsmesseinrichtung aufweist: eine erste Abstandsmesseinrichtung zum Messen eines Abstands zu einem in dem zu überwachenden Bereich vorhandenen Objekt auf der Grundlage des reflektierten Lichts des ersten Lichts; sowie eine zweite Abstandsmesseinrichtung zum Messen eines Abstands zu einem in dem zu überwachenden Bereich vorhandenen Objekt auf der Grundlage des reflektierten Lichts des zweiten Lichts.

4. Optische Überwachungsvorrichtung nach Anspruch 3, wobei sich die Wellenlänge des ersten Lichts und die Wellenlänge des zweiten Lichts voneinander unterscheiden.

5. Optische Überwachungsvorrichtung nach einem der Ansprüche 1 bis 4, wobei die Lichtabstrahleinrichtung einen Strahlkombinierer zum Kombinieren von Lichtern aufweist, die von den mehreren Lichtquellen emittiert werden.

6. Optische Überwachungsvorrichtung nach einem der Ansprüche 1 bis 5, ferner mit einer Lichttrenneinrichtung zum Trennen eines von der Lichtabstrahleinrichtung zu dem zu überwachenden Bereich abgestrahlten Lichts vom reflektierten Licht.

7. Optische Überwachungsvorrichtung nach einem der Ansprüche 1 bis 6,
wobei die Merkmalsextraktionseinrichtung ein Merkmal im Hinblick auf die Oberflächenrauheit eines in dem zu überwachenden Bereich vorhandenen Objekts auf der Grundlage eines Messergebnisses des Abstands für jede der mehreren Richtungen für ein reflektiertes Licht eines von der Lichtabstrahleinrichtung abgestrahlten Lichts mit einem ersten Strahldurchmesser unter den mehreren Lichtern sowie eines Messergebnisses des Abstands für jede der mehreren Richtungen für ein reflektiertes Licht eines von der Lichtabstrahleinrichtung abgestrahlten Lichts mit einem zweiten Strahldurchmesser extrahiert, der kleiner als der erste Strahldurchmesser ist.

8. Optische Überwachungsvorrichtung nach einem der Ansprüche 1 bis 7,
wobei die Merkmalsextraktionseinrichtung ein Merkmal, ob sich ein in dem zu überwachenden Bereich vorhandenes Objekt bewegt, auf der Grundlage eines Messergebnisses des Abstands für ein reflektiertes Licht eines von der Lichtabstrahleinrichtung abgestrahlten Lichts mit einem ersten Strahldurchmesser unter den mehrfach abgestrahlten mehreren Lichtern sowie eines Messergebnisses des Abstands für ein reflektiertes Licht eines von der Lichtabstrahleinrichtung abgestrahlten Lichts mit einem zweiten Strahldurchmesser extrahiert, der kleiner als der erste Strahldurchmesser ist.

9. Optische Überwachungsvorrichtung nach einem der Ansprüche 1 bis 8, wobei die Lichtabstrahleinrichtung eine optische Abtasteinrichtung zum Abtasten von Lichtern aufweist, die zu dem zu überwachenden Bereich abzustrahlen sind.

10. Optische Überwachungsvorrichtung nach einem der Ansprüche 1 bis 9, ferner mit einem Strahlaufweiter, der zwischen der Lichtabstrahleinrichtung und mindestens einigen der mehreren Lichtquellen angeordnet ist, zum Aufweiten eines Strahldurchmessers des von der Lichtquelle emittierten Lichts.

11. Optische Überwachungsvorrichtung nach einem der Ansprüche 1 bis 10, ferner mit einer Kollimationslinse, die zwischen der Lichtabstrahleinrichtung und mindestens einigen der mehreren Lichtquellen angeordnet ist, zum Kollimieren des von der Lichtquelle emittierten Lichts.

12. Optische Überwachungsvorrichtung nach einem der Ansprüche 1 bis 11, wobei die Lichtabstrahleinrichtung die mehreren Lichter zu dem zu überwachenden Bereich mit sich voneinander unterscheidenden Strahldurchmessern abstrahlt.

13. Optisches Überwachungsverfahren, das aufweist:
Abstrahlen mehrerer Lichter, deren optische Achsen zusammenfallen, darunter zweier Lichter mit sich voneinander unterscheidenden Strahldurchmessern, zu einem zu überwachenden Bereich in mehreren Richtungen, und
Empfangen reflektierter Lichter der mehreren Lichter, die von dem zu überwachenden Bereich einfallen;
Messen eines Abstands zu einem in dem zu überwachenden Bereich vorhandenen Objekt für jedes der mehreren Lichter auf der Grundlage des reflektierten Lichts; und
Extrahieren eines Merkmals im Hinblick auf eine Größe eines in dem zu überwachenden Bereich vorhandenen Objekts auf der Grundlage eines Messergebnisses des Abstands für jede der mehreren Richtungen für das reflektierte Licht eines Lichts mit einem ersten Strahldurchmesser unter den in mehreren Richtungen abgestrahlten mehreren Lichtern sowie eines Messergebnisses des Abstands für jede der mehreren Richtungen für das reflektierte Licht mit einem zweiten Strahldurchmesser, der kleiner als der erste Strahldurchmesser ist.

## Revendications

1. Appareil de surveillance optique comprenant :
une pluralité de sources de lumière ;
un moyen d'exposition à un rayonnement de lumière pour l'exposition à un rayonnement d'une pluralité de lumières, dont les axes optiques coïncident les uns avec les autres, émises par la pluralité de sources de lumière vers une zone à surveiller, le moyen d'exposition à un rayonnement de lumière exposant la zone à surveiller au rayonnement d'au moins une parmi la pluralité de lumières et au moins une autre parmi la pluralité de lumières avec des diamètres de faisceau mutuellement différents ;
un moyen de réception de lumière pour la réception de lumières réfléchies de la pluralité de faisceaux de lumière incidents depuis la zone à surveiller ;
un moyen de mesure de distance pour la mesure, pour chacune de la pluralité de lumières, d'une distance à un objet présent dans la zone à surveiller sur la base des lumières réfléchies ; et
un moyen d'extraction de caractéristique pour l'extraction d'une caractéristique de l'objet présent dans la zone à surveiller sur la base de résultats de mesure de la distance pour la pluralité de lumières mesurées par le moyen de mesure de distance, et
dans lequel la pluralité de lumières sont irradiées vers la zone à surveiller dans une pluralité de directions, et
dans lequel le moyen d'extraction de caractéristique extrait une caractéristique par rapport à une taille d'un objet présent dans la zone à surveiller sur la base d'un résultat de mesure de la distance, pour chacune de la pluralité de directions, pour la lumière réfléchie d'une lumière irradiée depuis le moyen d'exposition à un rayonnement de lumière avec un premier diamètre de faisceau parmi la pluralité de lumières irradiées dans une pluralité de directions et d'un résultat de mesure de la distance, pour chacune de la pluralité de directions, pour la lumière réfléchie d'une lumière irradiée depuis le moyen d'exposition à un rayonnement de lumière avec un deuxième diamètre de faisceau inférieur au premier diamètre de faisceau.

2. Appareil de surveillance optique selon la revendication 1, dans lequel la pluralité de sources de lumière comporte une première source de lumière pour l'émission d'une première lumière et une deuxième source de lumière pour l'émission d'une deuxième lumière.

3. Appareil de surveillance optique selon la revendication 2, dans lequel le moyen de mesure de distance comporte : un premier moyen de mesure de distance pour la mesure d'une distance à un objet présent dans la zone à surveiller sur la base de la lumière réfléchie de la première lumière ; et un deuxième moyen de mesure de distance pour la mesure d'une distance à un objet présent dans la zone à surveiller sur la base de la lumière réfléchie de la deuxième lumière.

4. Appareil de surveillance optique selon la revendication 3, dans lequel la longueur d'onde de la première lumière et la longueur d'onde de la deuxième lumière sont différentes l'une de l'autre.

5. Appareil de surveillance optique selon l'une quelconque des revendications 1 à 4, dans lequel le moyen d'exposition à un rayonnement de lumière comporte un combineur de faisceaux pour la combinaison de lumières émises par la pluralité de sources de lumière.

6. Appareil de surveillance optique selon l'une quelconque des revendications 1 à 5, comprenant en outre un moyen de séparation de lumière pour la séparation d'une lumière irradiée depuis le moyen d'exposition à un rayonnement de lumière vers la zone à surveiller depuis la lumière réfléchie.

7. Appareil de surveillance optique selon l'une quelconque des revendications 1 à 6,
dans lequel le moyen d'extraction de caractéristique extrait une caractéristique par rapport à la rugosité de surface d'un objet présent dans la zone à surveiller sur la base d'un résultat de mesure de la distance, pour chacune de la pluralité de directions, pour une lumière réfléchie d'une lumière irradiée depuis le moyen d'exposition à un rayonnement de lumière avec un premier diamètre de faisceau parmi la pluralité de lumières et d'un résultat de mesure de la distance, pour chacune de la pluralité de directions, pour une lumière réfléchie d'une lumière irradiée depuis le moyen d'exposition à un rayonnement de lumière avec un deuxième diamètre de faisceau inférieur au premier diamètre de faisceau.

8. Appareil de surveillance optique selon l'une quelconque des revendications 1 à 7,
le moyen d'extraction de caractéristique extrait une caractéristique indiquant si un objet présent dans la zone à surveiller se déplace ou non, sur la base d'un résultat de mesure de la distance pour une lumière réfléchie d'une lumière irradiée depuis le moyen d'exposition à un rayonnement de lumière avec un premier diamètre de faisceau parmi la pluralité de lumières irradiées plusieurs fois et d'un résultat de mesure de la distance pour une lumière réfléchie d'une lumière irradiée depuis le moyen d'exposition à un rayonnement de lumière avec un deuxième diamètre de faisceau inférieur au premier diamètre de faisceau.

9. Appareil de surveillance optique selon l'une quelconque des revendications 1 à 8, dans lequel le moyen d'exposition à un rayonnement de lumière comporte un moyen de balayage optique pour le balayage de lumières à irradier vers la zone à surveiller.

10. Appareil de surveillance optique selon l'une quelconque des revendications 1 à 9, comprenant en outre un expanseur de faisceau agencé entre le moyen d'exposition à un rayonnement de lumière et au moins certaines parmi la pluralité de sources de lumière pour l'expansion d'un diamètre de faisceau de la lumière émise par la source de lumière.

11. Appareil de surveillance optique selon l'une quelconque des revendications 1 à 10, comprenant en outre une lentille collimatrice agencée entre le moyen d'exposition à un rayonnement de lumière et au moins certaines parmi la pluralité de sources de lumière pour la collimation de la lumière émise par la source de lumière.

12. Appareil de surveillance optique selon l'une quelconque des revendications 1 à 11, dans lequel le moyen d'exposition à un rayonnement de lumière irradie la pluralité de lumière vers la zone à surveiller avec des diamètres de faisceau mutuellement différents.

13. Procédé de surveillance optique comprenant les étapes consistant en :
l'exposition d'une zone à surveiller à un rayonnement d'une pluralité de lumières, dont les axes optiques coïncident les uns avec les autres, comportant deux lumières ayant des diamètres de faisceau mutuellement différents dans une pluralité de directions, et
la réception de lumières réfléchies de la pluralité de lumières incidentes depuis la zone à surveiller ;
la mesure d'une distance à un objet présent dans la zone à surveiller pour chacune de la pluralité de lumières sur la base de la lumière réfléchie ; et
l'extraction d'une caractéristique par rapport à une taille d'un objet présent dans la zone à surveiller sur la base d'un résultat de mesure de la distance, pour chacune de la pluralité de directions, pour la lumière réfléchie d'une lumière avec un premier diamètre de faisceau parmi la pluralité de lumières irradiées dans une pluralité de directions et d'un résultat de mesure de la distance, pour chacune de la pluralité de directions, pour la lumière réfléchie avec un deuxième diamètre de faisceau inférieur au premier diamètre de faisceau.
